# EUROPÄISCHE PATENTSCHRIFT

(11) **EP 1 324 661 B1**
(45) Veröffentlichungstag und Bekanntmachung des Hinweises auf die Patenterteilung: **01.12.2004**
(21) Anmeldenummer: 01985664.0
(22) Anmeldetag: 13.09.2001
(51) Int. Cl.: A01N 25/14

(54) **DELTAMETHRINHALTIGES, WASSERDISPERGIERBARES GRANULAT**
DELTAMETHRIN-CONTAINING, WATER-DISPERSIBLE GRANULAR MATERIAL
GRANULE DISPERSIBLE DANS L'EAU ET CONTENANT DE LA DELTAMETHRINE

(30) Priorität: 26.09.2000 DE 10048006
(43) Veröffentlichungstag der Anmeldung: 09.07.2003
(73) Patentinhaber: Bayer CropScience GmbH, 65929 Frankfurt/Main (DE)
(72) Erfinder: NOEDING, Gunnar, 34326 Morscher-Konnefeld (DE); NIED, Agnes, 65931 Frankfurt (DE); ADAMS, Andrew, 69009 Lyon (FR); DIEHLMANN, Heiko, 65556 Limburg (DE); WAGENBACH, Manfred, 61130 Nidderau-Heldenbergen (DE)
(86) Internationale Anmeldenummer: PCT/EP2001/010578
(87) Internationale Veröffentlichungsnummer: WO 2002/026035

(56) Entgegenhaltungen:
- EP-A- 0 659 341
- FR-A- 2 713 045
- FR-A- 2 734 124
- US-A- 5 705 193

## Beschreibung

Die Erfindung betrifft Formulierungen von Deltamethrin als wasserdispergierbares Granulat, ein Verfahren zu deren Herstellung, und die Verwendung solcher Formulierungen zur Schädlingsbekämpfung.

Deltamethrin (S-α-Cyano-3-phenoxybenzyl-(1R,3R)-3-(2,2-dibromvinyl)-2,2-dimethylcyclopropancarbonsäureester) ist ein Insektizid aus der Klasse der Pyrethroide und wird seit langer Zeit in großem Umfang zur Schädlingsbekämpfung eingesetzt (C. D. S. Tomlin, The Pesticide Manual, 11. Auflage, British Crop Protection Council, Farnham 1997).

Zahlreiche Formulierungen sind bekannt, darunter Suspensionskonzentrate, die den Vorteil haben, ohne organische Lösungsmittel auszukommen. Weitere lösungsmittelfreie Formulierungen sind wasserdispergierbare Granulate (WDG), die bei ihrer Zugabe zu Wasser in ähnlicher Weise wie Suspensionskonzentrate zu einer Suspension der Deltamethrinteilchen in Wasser führen.

In der EP-A 0 224 845 sind in allgemeiner Weise wasserdispergierbare Granulate zur Anwendung im Pflanzenschutz beschrieben. Eine größere Zahl möglicher Wirkstoffe ist aufgeführt, darunter auch Deltamethrin. Es findet sich jedoch kein Beispiel für eine deltamethrinhaltige Formulierung.

Es wurde nun überraschend gefunden, daß bestimmte WDG-Formulierungen von Deltamethrin in der Anwendung deutlich verbesserte Aktivität gegenüber den üblicherweise verwendeten Suspensionskonzentraten zeigen.

Die vorliegende Erfindung unterscheidet sich von US 5 705 193 und FR 2 713 045 durch die Abwesenheit von Lösungsmitteln.

Die vorliegende Erfindung unterscheidet sich von EP 0 659 341 durch die gleichzeitige Anwesenheit eines Tensids und eines Dispergiermittels sowie dessen Menge; die Anwesenheit einer Säure, die zur pH Regulierung dient und somit nicht mit Bicarbonat Zwecks Effervescenz vermischt ist.

Die vorliegende Erfindung unterscheidet sich von FR 2 734 124 durch die Anwesenheit einer Säure, die Menge an Dispergiermittel sowie die Tatsache, daß sich FR 2 734 124 mit flüssigen oder fast flüssigen Wirkstoffe befaßt.

Gegenstand der Erfindung ist ein wasserdispergierbares Granulat, enthaltend
a) 5 bis 60 Gew.-% Deltamethrin,
b) 5 bis 15 Gew.-% an Netzmittel,
c) 2 bis 30 Gew.-% an Dispergiermittel,
d) 10 bis 70 Gew.-% eines festen Inertstoffes,
e) eine oder mehrere Säuren in einer Menge, um den pH Wert der Mischung im Bereich 1 bis 7 einzustellen.

Deltamethrin ist kommerziell erhältlich von der Aventis CropScience SA, Lyon, Frankreich.

Als Netzmittel eignen sich beispielsweise Alkylnaphthalinsulfonate, wie Supragil WP® (Rhodia GmbH), N,N-Dialkyltaurate, wie Arkopon T® (Clariant GmbH) oder Geropon T-77® (Rhodia GmbH), oder, vorzugsweise, eine Mischung aus einem Natriumalkylnaphtalinsulfonat und dem Natriumsalz eines sulfonierten Alkylcarboxylats, wie Morwet EFW® (Witco Corporation, Houston, USA).

Die Granulate enthalten im allgemeinen 5 bis 15 Gew.-%, besonders bevorzugt 5 bis 12 Gew.-% Netzmittel, wobei dieses eine Mischung aus mehreren Komponenten sein kann.

Als Dispergiermittel werden beispielsweise modifizierte Natriumligninsulfonate, wie Borresperse Na®, Ufoxane 3A® und Ultrazine Na® (Borregard), Kraft-Natriumligninsulfonate, wie Reax 88 B® (Westvaco) oder Naphtalin-Formaldehyd-Kondensate, wie Dispersing Agent SI® (Clariant GmbH), Morwet D425® (Witco Corporation) und Galoryl DT 201® (CFPI) verwendet

Bevorzugte Dispergiermittel sind Natriumsalze von Alkylnaphtylsulfonsäure-Formaldehyd-Kondensaten und Natriumligninsulfonat, die beispielsweise unter den Bezeichnungen Morwet D425® (Witco Corp.) bzw. Ufoxane 3A® (Borregard) kommerziell erhältlich sind.

Die Formulierung enthält im allgemeinen 2 bis 30 Gew.-% vorzugsweise 2 bis 25 Gew.-%, besonders bevorzugt 2 bis 20 Gew.-% des Dispergiermittels, welches gegebenenfalls eine Mischung aus zwei oder mehr Komponenten sein kann.

Als fester Inertstoff werden beispielsweise Substanzen wie Talkum, Bentonite, Silika, Silikate, Silikagele, synthetische Silikate, Attaclay, Kalk, Löß, Kreide, Ton, Dolomit, Kieselgur, Diatomenerde, Calciumsulfat, Magnesiumsulfat, Magnesiumoxid, gemahlene Kunststoffe und Harze, Attapulgit, Montmorillonite, Vermiculite, Glimmer, geschrotetes oder gemahlenes Getreide, Holzschrot oder -mehl, geschrotete oder gemahlene Baumrinde, geschrotete Nußschalen oder Cellulose eingesetzt.

Vorzugsweise wird als fester Inertstoff Kaolin, wie Argirec B24® von Blaric Mineraux de Paris, oder China Clay von ECC International, eingesetzt.

Die Formulierung enthält im allgemeinen 10 bis 80 Gew.-%, vorzugsweise 20 bis 70 Gew.-% des festen Inertstoffs.

Als Säure werden vorzugsweise organische Säuren, insbesondere Carbonsäuren, wie Salicylsäure, besonders bevorzugt Di- und Tricarbonsäuren, wie Zitronensäure, Bernsteinsäure, Weinsäure oder Maleinsäure, oder Mischungen derselben eingesetzt.

Die Säure wird in einer Menge zugesetzt, die eine Einstellung des pH-Werts der Formulierung im Bereich von 1 bis 7, vorzugsweise 2 bis 6, bewirkt.

Neben den beschriebenen können die erfindungsgemäßen Formulierungen weitere, in der Formulierungstechnik übliche Bestandteile enthalten. Beispiele sind Antischaummittel, wie Dialkylpolysiloxane, beispielsweise Rhodorsil 416® (Rhodia, Frankreich), Bindemittel, wie Polyvinylalkohol beispielsweise Mowiol 383® (Clariant, BRD), Konservierungsstoffe, wie Benzoesäure oder Sorbinsäure, oder weitere übliche Adjuvantien.

Erfindungsgemäße Granulate können nach üblichen, dem Fachmann bekannten Methoden hergestellt werden.

So werden wasserdispergierbare Granulate nach dem Extrusions-Verfahren gewöhnlich durch Mischen des Wirkstoffs mit den Formulierungshilfsmitteln und einem Inertmaterial, anschließendem Trockenvermahlen dieser Mischung (nicht nötig bei genügender Partikelfeinheit der Ausgangsstoffe), Anfeuchten dieses Pulvers mit einer geeigneten Menge Wasser und anschließend erfolgendem Kompaktieren des Materials in einem Extruder hergestellt. So erzeugte Granulate werden getrocknet und gegebenenfalls auf eine geeignete Granulatgröße fraktioniert oder zerkleinert.

Für erfindungsgemäße Granulate, die nach dem bevorzugten Wirbelschicht-Verfahren hergestellt werden, wird eine in der Regel 40-70% Trockenmasse enthaltene wäßrige Dispersion aus Wirkstoff, Formulierungshilfsmitteln und Inertmaterial zubereitet, die in der Regel naßvermahlen wird. Die Verwendung einer Wirkstoffdispersion als Ausgangsmaterial für ein Granulat ist wirtschaftlicher als die Verwendung eines Wirkstoffpulvers, wie bei der Extrusionsgranulierung, da eine Naßvermahlung im Vergleich zu einer Trockenvermahlung technisch sicherer und leichter durchführbar und somit auch kostengünstiger ist. Diese Dispersion wird vorzugsweise im Gegenstrom-Verfahren granuliert, indem sie in eine Kammer gesprüht wird, in die im Gegenstrom erhitzte Luft strömt. Dies führt zur Wasserverdampfung. Das verdampfte Wasser wird durch die entgegenströmende Luft aus der Kammer ausgetragen. Die nicht flüchtigen Bestandteile bleiben in Form eines Pulvers zurück, das durch die einströmende Luft verwirbelt wird. Weitere eingesprühte Dispersion lagert sich auf diesem Pulverpartikeln ab, das Wasser verdampft, und im folgenden baut sich ein Granulat auf, das sich durch eine hohe Granulatpartikeloberfläche, eine runde Granulatpartikelform und eine im Vergleich zu dem kompaktierten Extrusionsgranulat sehr lockeren Aufbau ausgezeichnet.

Ein solches Verfahren ist ebenfalls Gegenstand der Erfindung.

Die vergleichsweise hohe Granulatbberfläche führt bei der Anwendung erfindungsgemäß hergestellter Granulate zusammen mit dessen lockeren Aufbau zu einer besseren Benetzung mit Wasser und somit zu einer schnellen Dispergierung in der Spritzbrühe. Das als Vorlage dienende Formulierungspulver kann auch statt durch direktes Einsprühen in die Granulierkammer durch Sprühtrocknung hergestellt werden. Ebenfalls kann das Formulierungspulver durch eine trocken vermischte Mischung der Formulierungsbestandteile ersetzt werden.

Die erfindungsgemäßen Formulierungen eignen sich zur Schädlingsbekämpfung im Pflanzenschutz, sowie vorzugsweise zur Vektorenkontrolle und zur Kontrolle von Hygiene- und Vorratsschädlingen in Wohn- und Lagerräumen, Hof und Garten. Bevorzugt ist die Verwendung zur professionellen Schädlingsbekämpfung durch Kammerjäger. Bei den Schädlingen handelt es sich im allgemeinen um tierische Schädlinge, insbesondere Arthropoden, wie beispielsweise Schaben. Zur Anwendung werden die erfindungsgemäßen Granulate in Wasser dispergiert.

Gegenstand der Erfindung ist auch die Verwendung einer erfindungsgemäßen Formulierung zur Schädlingsbekämpfung, sowie ein Verfahren zur Bekämpfung von Schädlingen, wie Schaben, wobei man eine erfindungsgemäße Formulierung in Form einer wäßrigen Dispersion auf die Schädlinge oder von ihnen frequentierte Orte aufbringt.

Die Erfindung wird an den folgenden Beispielen verdeutlicht, ohne Sie dadurch einzuschränken.

Für die Herstellung nach dem Wirbelschicht-Verfahren wurden die Formulierungsbestandteile in Wasser dispergiert und naß vermahlen. Anschließend wurde die Wirkstoff-Dispersion im Gegenstrom-Verfahren in die Granulierkammer gesprüht. Das entstandene Formulierungs-pulver wurde durch weiteres Aufsprühen von Dispersion zu einem Granulat aufgebaut. Es wurde ein Labor Wirbelschicht-Granulierer Büchi 710 von Büchi Laboratorium-Technik AG verwendet. Größere Ansätze wurden mit einem Gerät Typ S-3 von Aeromatic Fielder AG mit ca. 20 kg Fassungsvermögen hergestellt.

Die Zusammensetzung des Granulats ist identisch mit der Trockenmasse der eingesprühten Dispersion.

### Beispiel 1

| | **Gew. %** |
|---|---|
| Deltamethrin | 25 |
| Natriumsalz eines Alkylnaphthylsulfonsäure-Formaldehyd-Kondensats (Morwet D425®, Witco Corp.) | 16 |
| Mischung aus einem Natriumalkylnaphthalinsulfonat und dem Natriumsalz eines sulfonierten Alkylcarboxylats (Morwet EFW®, Witco Corp.) | 8 |
| China Clay Grade D | 49 |
| Zitronensäure | 2 |

### Beispiel 2

| | **Gew. %** |
|---|---|
| Deltamethrin | 25 |
| Natriumsalz von Ligninsulfonat (Ufoxane 3A®, Borregaard) | 8 |
| Mischung aus einem Natriumalkylnaphthalinsulfonat und dem Natriumsalz eines sulfonierten Alkylcarboxylats (Morwet EFW®, Witco Corp.) | 10 |
| China Clay Grade D | 55 |
| Zitronensäure | 2 |

### Beispiel 3

| | **Gew. %** |
|---|---|
| Deltamethrin | 25 |
| Natriumligninsulfonat (Borresperse Na®, Borregaard) | 13 |
| Alkylnaphtalinsulfonate (Supragii WP®, Rhodia GmbH) | 12 |
| China Clay Grade D | 47 |
| Weinsäure | 3 |

### Beispiel 4

| | **Gew. %** |
|---|---|
| Deltamethrin | 5 |
| Natriumsalz eines Alkylnaphthylsulfonsäure-formaldehyd-Kondensats (Morwet D425®, Witco Corp.) | 16 |
| Mischung aus einem Natriumalkylnaphthalinsulfonat und dem Natriumsalz eines sulfonierten Alkylcarboxylats (Morwet EFW®, Witco Corp.) | 8 |
| China Clay Grade D | 69 |
| Zitronensäure | 2 |

### Beispiel 5

| | Gew. % |
|---|---|
| Deltamethrin | 25 |
| Naphthalinsulfonsäure-Formaldehyd-Kondensat (Galoryl DT 201®, CFPI Industries) | 20 |
| N,N-Dialkytaurat (Arkopon T®, Clariant GmbH) | 5 |
| China Clay Grade D | 47 |
| Bernsteinsäure | 3 |

### Beispiel 6

| | **Gew. %** |
|---|---|
| Deltamethrin | 50 |
| Natriumsalz eines Alkylnaphthylsulfonsäure-formaldehyd-Kondensats (Morwet D425®, Witco Corp.) | 16 |
| Mischung aus einem Natriumalkylnaphthalinsutfonat und dem Natriumsalz eines sulfonierten Alkylcarboxylats (Morwet EFW®, Witco Corp.) | 8 |
| China Clay Grade D | 24 |
| Zitronensäure | 2 |

### Beispiel 7

| | **Gew. %** |
|---|---|
| Deltamethrin | 25 |
| Kraft-Natriumligninsulfonat (Reax 88 B®, Westvaco) | 15 |
| Mischung aus einem Natriumalkylnaphthalinsulfonat und dem Natriumsalz eines sulfonierten Alkylcarboxylats (Morwet EFW®, Witco Corp.) | 10 |
| Kaolin (Argirec B24®) | 46 |
| Weinsäure | 4 |

### Beispiel 8

| | **Gew. %** |
|---|---|
| Deltamethrin | 25 |
| Kraft-Natriumligninsulfonat (Reax 88 B®, Westvaco) | 2 |
| Mischung aus einem Natriumalkylnaphthalinsulfonat und dem Natriumsalz eines sulfonierten Alkylcarboxylats (Morwet EFW®, Witco Corp.) | 12 |
| China Clay Grade D | 59 |
| Zitronensäure | 2 |

### Beispiel 9

Das Granulat aus Beispiel 1 wurde als 0,125 Gew.-%ige Dispersion in Wasser verdünnt. Diese Dispersion wurde auf unterschiedliche Oberflächen, wie Estrich und Sperrholz, mit einer Aufwandmenge von 6,25 mg Deltamethrin pro m² aufgesprüht. Die so behandelten Oberflächen wurden eingelagert, und nach 1, 7, und 30 Tagen auf ihre Effektivität gegen Amerikanische Schaben (*Periplaneta americana*) untersucht. Hierzu wurde eine Anzahl Schaben der Oberfläche ausgesetzt und die Mortalität nach 1 und 6 Tagen bestimmt. Zum Vergleich wurde eine handelsübliche 2,5 Gew.-%ige Deltamethrin Suspensions Konzentrat Formulierung (SC) benutzt.

Die Ergebnisse waren wie folgt: (TnB = Tage nach Behandlung der Oberfläche)

| **Behandlung** | **% Mortalität** | | | | | |
|---|---|---|---|---|---|---|
| | **1 TnB** **(1 Tag später)** | **1 TnB** **(6 Tage später)** | **7 TnB** **(1 Tag später)** | **7 TnB** **(6 Tage später)** | **30 TnB** **(1 Tag später)** | **30 TnB** **(6 Tage später)** |
| Beispiel 1 auf Sperrholz | 27 | 53 | 87 | 100 | 53 | 60 |
| SC auf Sperrholz | 13 | 53 | 0 | 20 | 47 | 53 |
| Beispiel 1 auf Estrich | 100 | 100 | 100 | 100 | 100 | 100 |
| SC auf Estrich | 20 | 27 | 27 | 13 | 0 | 0 |

Es ist überraschend, daß die Formulierung der Erfindung bessere Ergebnisse zeigt, als das Suspensions Konzentrat.

### Beispiel 10

Die Granulate aus Beispiel 1 und 2 wurden als 0,125 Gew.-%ige Dispersionen in Wasser verdünnt. Diese Dispersionen wurden auf Keramik mit einer Aufwandmenge von 6,25 mg Deltamethrin pro m² aufgesprüht. Die so behandelten Oberflächen wurden eingelagert und nach unterschiedlichen Lagerungszeiten auf ihre Effektivität gegen Amerikanische Schaben (*Periplaneta americana*) untersucht. Die Mortalität der Schaben wurde nach gegebenen Zeiten bestimmt. Zum Vergleich wurde eine handelsübliche 2,5%ige Deltamethrin Suspension Konzentrat Formulierung (SC) benutzt.

Die Ergebnisse waren wie folgt:

| **Behandlung** | **% Mortalität** |
|---|---|
| | **101 Tage alter Belag** |
| Beispiel 1 auf Keramik | 100 |
| Beispiel 2 auf Keramik | 100 |
| SC auf Keramik | 93 |

Es ist ersichtlich, daß die Formulierungen der Erfindung bessere Ergebnisse zeigen, als das Suspensions Konzentrat.

## Patentansprüche

1. Lösungsmittelfreies, wasserdispergierbares Granulat, enthaltend
a) 5 bis 60 Gew.-% Deltamethrin,
b) 5 bis 15 Gew.-% an Netzmittel,
c) 2 bis 30 Gew.-% an Dispergiermittel,
d) 10 bis 70 Gew.-% eines festen Inertstoffes aus der Gruppe Talkum, Bentonite, Attaclay, Kalk, Löß, Kreide, Ton, Dolomit, Diatomenerde, Calciumsulfat, Magnesiumsulfat, Magnesiumoxid, gemahlene Kunststoffe und Harze, Attalpugit, Montmorillonite, Vermiculite, Glimmer, geschrotetes oder gemahlenes Getreide, Holzschrot oder -mehl, geschrotete oder gemahlene Baumrinde, geschrotete Nußschalen oder Cellulose,
e) eine oder mehrere Säuren in einer Menge, um den pH-Wert der Mischung im Bereich 1 bis 7 einzustellen.

2. Verfahren zur Herstellung eines Granulats gemäß Anspruch 1, enthaltend die Schritte
a) Zubereitung und Naßvermahlung einer wäßrigen Dispersion enthaltend Wirkstoff, Formulierungshilfsmittel und Inertstoff, und
b) kontinuierliches Einsprühen dieser Dispersion in eine Kammer durch die ein Gegenstrom erhitzte Luft geführt wird.

3. Lösungsmittelfreies, wasserdispergierbares Granulat, gemäß einem oder mehreren der Ansprüche 1 bis 2, worin das Netzmittel aus einer Mischung eines Natriumalkylnaphtalinsulfonats und dem Natriumsalz eines sulfonierten Alkylcarboxylats besteht.

4. Lösungsmittelfreies, wasserdispergierbares Granulat, gemäß einem oder mehreren der Ansprüche 1 bis 3, worin das Dispergiermittel aus Natriumsalzen von Alkylnaphtylsulfonsäure-Formaldehyd-Kondensaten und Natriumligninsulfonat besteht.

5. Lösungsmittelfreies, wasserdispergierbares Granulat, gemäß einem oder mehreren der Ansprüche 1 bis 4, worin die zur pH-Wert-Einstellung verwendeten Säuren Di- und Tricarbonsäuren und deren Mischungen untereinander sind.

6. Nicht therapeutische Verwendung eines Granulats gemäß einem oder mehreren der Ansprüche 1 bis 5 zur Kontrolle von tierischen Schädlingen.

7. Verfahren zur nicht therapeutischen Bekämpfung von tierischen Schädlingen, wobei man ein Granulat gemäß einem oder mehreren der Ansprüche 1 bis 6 in eine wäßrige Dispersion überführt und diese in wirksamer Menge auf die Schädlinge oder von ihnen frequentierte Orte aufbringt.

## Claims

1. Solvent-free water-dispersible granules, comprising
a) from 5 to 60% by weight of deltamethrin,
b) from 5 to 15% by weight of wetting agent,
c) from 2 to 30% by weight of dispersant,
d) from 10 to 70% by weight of a solid inert substance from the group comprising talc, bentonite, attaclay, lime, loess, chalk, dolomite, diatomaceous earth, calcium sulfate, magnesium sulfate, magnesium oxide, ground plastics and resins, attalpugite, montmoriflonite, vermiculite, mica, crushed or ground cereals, wood chips or wood meat, crushed or ground tree bark, crushed nutshells or cellulose,
e) one or more acids in an amount sufficient to adjust the pH of the mixture to a value in the ranage from 1 to 7.

2. A process for preparing granules as claimed in claim 1, which process comprises the following steps
a) preparation and wet grinding of an aqueous dispersion comprising active compound, formulation auxiliaries and inert substance, and
b) continuous spraying of this dispersion into a chamber through which heated air is passed in countercurrent.

3. Solvent-free water-dispersible granules as claimed in one or more of claims 1 to 2, where the wetting agent consists of a mixture of a sodium- alkylnaphtalenesulfonate and the sodium salt of a sulfonated alkylcarboxylate.

4. Solvent-free water-dispersible granules as claimed in one or more of claims 1 to 3, where the dispersant consists of sodium salts of alkylnaphtylsulfonic acid/formaldehyde condensates and sodium lignosulfonate.

5. Solvent-free water-dispersible granules as claimed in one or more of claims 1 to 4, where the acids used for adjusting the pH are di- and tricarboxylic acids and mixtures thereof.

6. The nontherapeutic use of granules as claimed in one or more of claims 1 to 5 for controlling animal pests.

7. A method for nontherapeutically controlling animal pests, where granules as claimed in one or more of claims 1 to 6 are converted into an aqueous dispersion and this dispersion is applied in an effective amount onto the pests or locations visited by them.

## Revendications

1. Granulé à disperser dans l'eau, sans solvants, renfermant
a) de 5 à 60 % en masse de deltaméthrine,
b) de 5 à 15 % en masse d'agent mouillant,
c) de 2 à 30 % en masse d'agent dispersant, ,
d) de 10 à 70 % en masse d'une matière inerte solide
prise dans le groupe comprenant le talc, la bentonite, l'attaclay, la chaux, le loess, la craie, l'argile, la dolomite, les terres de diatomées, le sulfate de calcium, le sulfate de magnésium, l'oxyde de magnésium, des matières plastiques et résines broyées, l'attapulgite, les montmorillonites, les vermiculites, le mica, les céréales broyées ou moulues, le bois égrugé ou la farine de bois, l'écorce d'arbres broyée ou moulue, des coquilles de noix broyées ou la cellulose,
e) un ou plusieurs acides en une quantité permettant d'établir un pH du mélange dans le domaine de 1 à 7.

2. Procédé pour la préparation d'un granulé selon la revendication 1, comprenant les étapes suivantes :
a) préparation et broyage par voie humide d'une dispersion aqueuse renfermant une substance active, des adjuvants de formulation et une matière inerte, et
b) injection en continu de cette dispersion dans une chambre à travers laquelle est conduit un contre-courant d'air chaud.

3. Granulé à disperser dans l'eau, sans solvants, selon une ou plusieurs des revendications 1 à 2, où l'agent mouillant est constitué par un mélange d'un alkylnaphtalènesulfonate de sodium et le sel sodique d'un alkylcarboxylate sulfoné.

4. Granulé à disperser dans l'eau, sans solvants, selon une ou plusieurs des revendications 1 à 3, où l'agent dispersant est constitué par des sels sodiques de condensés d'acide alkylnaphtalène-sulfonique-formaldéhyde et de lignosulfonate de sodium.

5. Granulé à disperser dans l'eau, sans solvants, selon une ou plusieurs des revendications 1 à 4, où les acides di- et tricarboxyliques utilisés pour l'ajustement de la valeur du pH sont des mélanges de ces acides.

6. Utilisation non thérapeutique d'un granulé selon une ou plusieurs des revendications 1 à 5, pour le contrôle de parasites d'animaux.

7. Procédé pour la lutte non thérapeutique contres les ravageurs d'animaux, dans lequel on transfère un granulé selon une ou plusieurs des revendications 1 à 6 dans une dispersion aqueuse et on applique celle-ci en une quantité efficace à des parasites ou les endroits de leur fréquentation.
